# NEUE EUROPÄISCHE PATENTSCHRIFT

(11) **EP 2 247 636 B2**
(45) Veröffentlichungstag und Bekanntmachung des Hinweises auf die Entscheidung über den Einspruch: **30.10.2019**
(45) Hinweis auf die Patenterteilung: 04.01.2017
(21) Anmeldenummer: 09712684.1
(22) Anmeldetag: 19.02.2009
(51) Int. Cl.: C08G 18/30, C08G 18/48, C08G 18/66, C08G 18/76, B60R 13/02, C08G 101/00

(54) **PLASTISCH VERFORMBARE POLYURTHAN-HARTSCHAUMSTOFFE MIT VERBESSERTER LUFTDURCHLÄSSIGKEIT UND DEREN VERWENDUNG ZUR HERSTELLUNG VON AUTOHIMMELN**
PLASTICALLY DEFORMABLE POLYURETHANE RIGID FOAMS WITH IMPROVED AIR PERMEABILITY AND USE THEREOF FOR PRODUCING AUTO ROOF LININGS
MOUSSE RIGIDE DE POLYURÉTHANNE PLASTIQUEMENT DÉFORMABLE, PRÉSENTANT UNE PERMÉABILITÉ À L AIR AMÉLIORÉE, ET SON UTILISATION POUR LA FABRICATION DE GARNITURE INTÉRIEURE DE TOIT DE VÉHICULE AUTOMOBILE

(30) Priorität: 20.02.2008 EP 08151705
(43) Veröffentlichungstag der Anmeldung: 10.11.2010
(73) Patentinhaber: BASF SE, 67056 Ludwigshafen am Rhein (DE)
(72) Erfinder: TEMPLIN, Markus, 49448 Lemförde (DE); MANUEL, Lopez, E-08004 Barcelona (ES); PACHECO GONZALEZ, Alfonso, E-08203 Sabaoell (ES)
(74) Vertreter: BASF IP Association
(86) Internationale Anmeldenummer: PCT/EP2009/051979
(87) Internationale Veröffentlichungsnummer: WO 2009/103764

(56) Entgegenhaltungen:
- EP-A- 0 437 787
- EP-A- 0 445 411
- EP-A- 1 674 493

## Beschreibung

Die vorliegende Erfindung betrifft ein Verfahren zur Herstellung von plastisch verformbaren Polyurethan-Hartschaumstoffen, bei dem man a) organische Polyisocyanate mit b) Polyhydroxyverbindungen, enthaltend b1) 2 bis 4-funktionelles Polyoxyalkylenpolyol mit einer Hydroxylzahl von 150 bis 650 und einem Anteil an primären Hydroxylgruppen von größer 70 % und b2) di- bis trifunktionelles Polyoxyalkylenpolyol mit einer Hydroxylzahl von 25 bis 40 und einem Anteil an primären Hydroxylgruppen von größer 70 %,gegebenenfalls c) Kettenverlängerungs- und/oder Vernetzungsmittel, d) Treibmittel, e) Katalysatoren und gegebenenfalls f) Hilfsmittel und Zusatzstoffe zu einer Reaktionsmischung vermischt und diese Reaktionsmischung ausreagieren lässt wobei der Gewichtsanteil der Verbindungen (b1) und (b2) an der Komponente (b) mindestens 70 Gew.-%, der Isocyanatindex 80 bis 150 beträgt und das Verhältnis von (b1) zu (b2) 0,8 : 1 bis 1,5 : 1 ist. Weiter betrifft die vorliegende Erfindung plastisch verformbaren Polyurethan-Hartschaumstoff, erhältlich nach einem erfindungsgemäßen Verfahren und die Verwendung eines erfindungsgemäßen plastisch verformbarenen Polyurethan-Hartschaumstoffs zur Innenverkleidung eines Kraftfahrzeugs, insbesondere als Dachhimmel.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils angegebenen Kombination, sondern auch in anderen Kombinationen verwendbar sind.

Plastisch verformbare Polyurethan-Hartschaumstoffe und deren Verwendung als Innenverkleidung in Kraftfahrzeugen ist bekannt und beispielsweise beschrieben im "Kunststoffhandbuch, Band 7, Polyurethane", Carl Hanser Verlag, 3. Auflage 1993, Kapitel 6.5.4.1.

EP 0 437 787 offenbart plastisch verformbare Polyurethan-Hartschaumstoffe und deren Verwendung zur Herstellung von Autohimmeln, herstellbar durch Umsetzung von a) Polyisocyanaten mit einer Polyol-Komponente b) aus Verbindungen mit mindestens zwei Hydroxylgruppen vom Molekulargewicht 187 bis 10.000, Kettenverlängerungs- und Vernetzungsmitteln mit mindestens zwei Hydroxylgruppen vom Molekulargewicht 32 bis 186, Wasser als Treibmittel, tert.-Aminkatalysatoren und gegebenenfalls Silicon-Schaumstabilisatoren, wobei als Komponente b) eine Polyolmischung aus 1.) 50 bis 70 Gew.-% an di- und/oder trifunktionellen, Hydroxylgruppen aufweisenden Polyethern einer OH-Zahl von 28 bis 600, und 2.) 20 bis 35 Gew.-% eines difunktionellen, Hydroxylgruppen aufweisenden Phthalsäurepolyesters einer OH-Zahl von 150 bis 440, 3.) 2 bis 10 Gew.-% Glyzerin, 4.) 3,5 bis 7 Gew.-% Wasser, 5.) 0,3 bis 1 Gew.-% eines einbaufähigen tert.-Aminkatalysators und gegebenenfalls 6.) 0,1 bis 2 Gew.-% eines Silikon-Schaumstabilisators verwendet werden. Vorzugsweise werden als Polyolkomponente b) eine Mischung aus trifunktionellen Polyethern mit einer OH-Zahl von 150 bis 500 auf Basis von Polypropylenoxid und einem langkettigen, trifunktionellen Polyether auf Basis von Polypropylen/Polyethylenoxid verwendet.

DE 43 33 795 offenbart plastisch verformbare Polyurethan-Hartschaumstoffe und deren Verwendung zur Herstellung von Autohimmeln, herstellbar durch Umsetzung von a) organischen Polyisocyanaten mit b) einer Mischung aus Polyhydroxylverbindungen in Gegenwart von c) Treibmitteln, d) Katalysatoren, e) Hilfsmitteln und/oder Zusatzstoffen, wobei die Mischung aus Polyhydroxylverbindungen b), bezogen auf das Gesamtgewicht der Polyhydroxyverbindungen b), b1) 40 bis 60 Gew.-% eines trifunktionellen Polyoxyalkylenpolyols mit einer Hydroxylzahl von 350 bis 500, b2) 15 bis 30 Gew.-% eines difunktionellen Polyoxyalkylenpolyols mit einer Hydroxylzahl von 200 bis 350, b3) 5 bis 20 Gew.-% eines di- bis trifunktionellen Polyoxyalkylenpolyols mit einer Hydroxylzahl von 25 bis 40 und b4) 15 bis 30 Gew.-% eines Dialkylenglykols, enthält. Besonders bevorzugt werden als Polyoxyalkylenpolyole mit Glycerin und 1,3-Propandiol gestartete Polyoxypropylenpolyole und mit einer Startermolekülmischung, bestehend aus Glycerin und Wasser gestartete Polyoxypropylen-Polyoxyethylenpolyole mit endständigen Ethylenoxideinheiten verwendet.

DE 10 2004 062 540 offenbart plastisch verformbare Polyurethan-Hartschaumstoffe und deren Verwendung zur Herstellung von Autohimmeln, herstellbar durch Umsetzung von organischen Polyisocyanaten mit Polyhydroxylverbindungen aus b1) Polyoxyalkylenpolyolen mit einer Funktionalität von 2 bis 3 und mit einer Hydroxylzahl von 25 bis 40, b2) Polyoxyalkylenpolyolen mit einer Funktionalität von 3 bis 4 und mit einer Hydroxylzahl von 400 bis 650, b3) Polyoxyalkylenpolyolen mit einer Funktionalität von 2 und mit einer Hydroxylzahl von 150 bis 550, b4) Polyesterpolyolen mit einer Funktionalität von 2 und mit einer Hydroxylzahl von 200 bis 350 und b5) Glycerin. Dabei werden bevorzugt als Etherkomponenten b1), b2) und b3) Verbindungen auf Basis von Ethylenoxid oder Propylenoxid eingesetzt, wobei in den Beispielen die Verbindung mit der kleinen Hydroxylzahl b1) auf Propylenoxyd und Ethylenoxyd basiert, während die Verbindungen mit den großen Hydroxylzahlen b2) und b3) ausschließlich aus Propylenoxid als Monomerkomponente basieren.

Die Anforderungen an im Automobilinnenbereich eingebaute plastisch verformbare Polyurethanhartschaumstoffe, die meist als Verkleidungsteile im Dachbereich, so genannte Dachhimmel, eingesetzt werden, sind vielschichtig. So müssen diese eine gewisse Steifigkeit aufweisen und dürfen keine störenden Substanzen emittieren, die beispielsweise zu Geruchsbildung führen. Eine besonders wichtige Funktion des Dachhimmels ist dessen Beitrag zur Akustik. Hier ist es insbesondere Aufgabe Luftgeräusche, den sogenannten Luftschall, zu reduzieren. Die Güte dieser Dachhimmeleigenschaften hängt entscheidend von den Eigenschaften der verwendeten plastisch verformbaren Polyurethan-Hartschaumstoffe ab. Für eine gute Luftschallabsorption sind Polyurethan-Hartschäume mit einer möglichst hohen Luftdurchlässigkeit erstrebenswert. Die heute bekannten plastisch verformbaren Polyurethan-Hartschäume erfüllen diese Anforderungen nur eingeschränkt.

Die Schalldämpfung eines plastisch verformbaren Polyurethan-Hartschaumstoffs/ Dachhimmels ist zu einem großen Maße von seiner Luftdurchlässigkeit abhängig. So wird beobachtet, dass Dachhimmel aus Polyurethan-Hartschaumstoffen mit einer verbesserten Luftdurchlässigkeit den Luftschall besser dämpfen. Eine verbesserte Luftdurchlässigkeit und damit auch eine verbesserte Schalldämpfung kann durch "Nadein" der thermoverformbaren Polyurethan-Hartschaumstoffe/Dachhimmel erfolgen. Dabei werden Nadeln in den fertigen Schaumstoff/Dachhimmel eingestochen und so die Luftdurchlässigkeit des Schaumstoffs/Dachhimmels und damit auch die Schalldämpfung verbessert. Dieses Verfahren hat aber den Nachteil, dass ein weiterer Arbeitsschritt zur Herstellung der schallabsorbierenden Polyurethanhartschaumstoffe nötig ist.

Aufgabe der vorliegenden Erfindung war es daher, ein Verfahren zur Herstellung plastisch verformbarer Polyurethan-Hartschaumstoffe zu liefern, die eine erhöhte Luftdurchlässigkeit und damit eine ausgezeichnete Schalldämpfung aufweisen, ohne dass weitere Verfahrensschritte, wie Nadeln, nötig sind.

Die erfindungsgemäße Aufgabe wird durch ein Verfahren zur Herstellung plastisch verformbarer Polyurethan-Hartschaumstoffe gelöst, bei dem man a) organische Polyisocyanate mit b) Polyhydroxyverbindungen, enthaltend b1) 2 bis 4-funktionelles Polyoxyalkylenpolyol mit einer Hydroxylzahl von 150 bis 650 und einem Anteil an primären Hydroxylgruppen von größer 70 % und b2) di- bis trifunktionelles Polyoxyalkylenpolyol mit einer Hydroxylzahl von 25 bis 40 und einem Anteil an primären Hydroxylgruppen von größer 70 %,gegebenenfalls c) Kettenverlängerungs- und/oder Vernetzungsmittel, d) Treibmittel, e) Katalysatoren und gegebenenfalls f) Hilfsmittel und Zusatzstoffe zu einer Reaktionsmischung vermischt und diese Reaktionsmischung ausreagieren lässt wobei der Gewichtsanteil der Verbindungen (b1) und (b2) an der Komponente (b) mindestens 70 Gew.-%, der Isocyanatindex 80 bis 150 beträgt und das Verhältnis von (b1) zu (b2) 0,8 : 1 bis 1,5 : 1 ist.

Erfindungsgemäße plastisch verformbare Polyurethan-Hartschaumstoffe können, vorzugsweise bei Werkzeugtemperaturen von 80 bis 160 °C, besonders bevorzugt von 100 bis 150 °C, plastisch verformt werden.

Als organische Polyisocyanate a) werden vorzugsweise die technisch gut zugänglichen aromatischen Polyisocyanate, besonders bevorzugt Mischungen aus Diphenylmethandiisocyanaten (MDI) und Polyphenyl-Polymethylenpolyisocyanaten, sogenanntes Roh-MDI, vorteilhafterweise mit einem monomer-MDI-Gehalt von 30 bis 65 Gew.-%, besonders bevorzugt von 35 bis 60 Gew.-% und insbesondere von 35 bis 55 Gew.-% eingesetzt.

Die Polyisocyanate a) können in Form von Polyisocyanatprepolymeren eingesetzt werden. Diese Polyisocyanatprepolymere sind erhältlich, indem vorstehend beschriebene Polyisocyanate (Bestandteil (a-1)) im Überschuss, beispielsweise bei Temperaturen von 30 bis 100 °C, bevorzugt bei etwa 80 °C, mit Polyolen (Bestandteil (a-2)), zum Prepolymer umgesetzt werden. Vorzugsweise werden dazu die im Folgenden unter b) beschriebenen Polyole eingesetzt. Gegebenenfalls können der Umsetzung zum Polyisocyanatprepolymer noch Kettenverlängerungsmittel (a-3) zugegeben werden. Als Kettenverlängerungsmittel (a-3) können alle im Folgenden unter c) beschriebenen Kettenverlängerer eingesetzt werden. Vorzugsweise wird dabei das Verhältnis von organischen Polyisocyanaten (a-1) zu Polyolen (a-2) und Kettenverlängerern (a-3) so gewählt, dass das Isocyanatprepolymer einen NCO-Gehalt von 10 bis 28 %, besonders bevorzugt von 14 bis 24 % aufweist.

Geeignet als organisches Polyisocyanat a) sind auch die Isocyanurat-, Biuret-, Carbodiimid- und/oder vorzugsweise Urethangruppen enthaltende Roh-MDI Modifikationen. Außerdem kann es für besondere Anwendungsgebiete zweckmäßig sein, dem Roh-MDI untergeordnete Mengen, beispielsweise bis maximal 10 Gew.-%, Toluylendiisocyanate-Isomerengemische und/oder gegebenenfalls mit Biuret-, Carbodiimid- und/oder Urethangruppen modifiziertes 4,4'- und/oder 2,4'-MDI zu zusetzen.

Polyhydroxyverbindungen b) enthaltend b1) 2 bis 4-funktionelles Polyoxyalkylenpolyol mit einer Hydroxylzahl von 150 bis 650 und einem Anteil an primären Hydroxylgruppen von größer 70 % und b2) di- bis trifunktionelles Polyoxyalkylenpolyol mit einer Hydroxylzahl von 25 bis 40 und einem Anteil an primären Hydroxylgruppen von größer 70 %. Dabei enthält die Polyhydroxyverbindung b1) vorzugsweise mindestens 30 Gew.-%, besonders bevorzugt mindestens 50 Gew.-% Ethylenoxid. Die Polyhydroxyverbindung b2) enthält vorzugsweise mindestens 50 Gew.-%, besonders bevorzugt mindestens 80 Gew.-% Propylenoxid.

Die Polyoxyalkylenpolyole werden nach bekannten Verfahren, beispielsweise durch anionische Polymerisation von Alkylenoxiden unter Zusatz mindestens eines Startermoleküls, das 2 bis 4, vorzugsweise 2 bis 3 reaktive Wasserstoffatome gebunden enthält, in Gegenwart von Katalysatoren erhalten. Als Katalysatoren können Alkalihydroxide, wie Natrium- oder Kaliumhydroxid oder Alkalialkoholate, wie Natriummethylat, Natrium- oder Kaliumethylat oder Kaliumisopropylat oder bei kationischer Polymerisation Lewis-Säuren, wie Antimonpentachlorid, Bortrifluorid-Etherat oder Bleicherde als Katalysatoren eingesetzt werden. Weiter können als Katalysatoren auch Doppelmetallcyanidverbindungen, sogenannte DMC-Katalysatoren, eingesetzt werden.

Vorzugsweise werden als Alkylenoxide eine oder mehrere Verbindungen mit 2 bis 4 Kohlenstoffatomen im Alkylenrest, wie Tetrahydrofuran, 1,3-Propylenoxid, 1,2- bzw. 2,3-Butylenoxid, jeweils alleine oder in Form von Mischungen, und vorzugsweise Ethylenoxid und/oder 1,2-Propylenoxid eingesetzt. Dabei werden die Mischung der Alkylenoxide sowie die Reihenfolge ihrer Zugabe so ausgewählt, dass ein Anteil an primären Hydroxylgruppen von größer 70 % erhalten wird. Insbesondere wird der Anteil von primären Hydroxylgruppen durch Einsatz von Ethylenoxid erreicht.

Als Startermoleküle kommen beispielsweise Ethylenglycol, Diethylenglycol, Glycerin, Trimethylolpropan, Pentaerythrit, Methylamin, Ethylamin, Isopropylamin, Butylamin, Benzylamin, Anilin, Toluidin, Toluoldiamin, Naphtylamin, Ethylendiamin, Methylendianilin, 1,3,-Propandiamin, 1,6-Hexandiamin, Ethanolamin, Diethanolamin, Triethanolamin sowie andere zwei oder mehrwertige Alkohole oder ein oder mehrwertige Amine in Betracht.

Neben den genannten Polyhydroxyverbindungen b1) und b2) können auch weitere Polyhydroxyverbindungen, wie weitere Polyetherole, Polyesterole oder andere, gegenüber Isocyanat reaktive Verbindungen, wie Polythiole oder Polyamine eingesetzt werden. Dabei beträgt der Gewichtsanteil der Verbindungen b1) und b2) an dem Gesamtgewicht der Komponente b) mindestens 70 Gew.-% und insbesondere mindestens 80 Gew.-%. Dabei beträgt das Verhältnis von Polyhydroxyverbindungen b1) und b2) 0,8 : 1 bis 1,5 : 1.

Als Kettenverlängerungsmittel und/oder Vernetzungsmittel c) können Substanzen mit einem Molekulargewicht von vorzugsweise kleiner 500 g/mol, besonders bevorzugt von 60 bis 400 g/mol eingesetzt werden, wobei Kettenverlängerer zwei gegenüber Isocyanaten reaktive Wasserstoffatome und Vernetzungsmittel drei gegenüber Isocyanat reaktive Wasserstoffatome aufweisen. Diese können einzeln oder bevorzugt in Form von Mischungen eingesetzt werden. Vorzugsweise werden Diole und/oder Triole mit Molekulargewichten kleiner als 400, besonders bevorzugt von 60 bis 300 und insbesondere 60 bis 150 eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, 1,4-Butandiol, 1,6-Hexandiol, 1,10-Decandiol und Bis-(2-hydroxyethyl)-hydrochinon, 1,2-, 1,3-, 1,4-Dihydroxycyclohexan, Diethylenglykol, Dipropylenglykol, Tripropylenglykol, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Kettenverlängerer (c) Diole, insbesondere Diethylenglycol oder Dipropylenglycol, eingesetzt.

Der Anteil an Kettenverlängerungsmittel und/oder Vernetzungsmittel c) am Gesamtgewicht der Komponenten b) bis f) beträgt, falls vorhanden, vorzugsweise 1 bis 60 Gew.-%, besonders bevorzugt 3 bis 40 Gew.-% und insbesondere 4 bis 15 Gew.-%.

Als Treibmittel d) wird vorzugsweise Treibmittel, enthaltend Wasser, eingesetzt. Als Treibmittel (d) können neben Wasser noch allgemein bekannte chemisch und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone und/ oder Acetale, beispielsweise (cyclo)aliphatische Kohlenwasserstoffe mit 4 bis 8 Kohlenstoffatomen, oder Fluorkohlenwasserstoffe, wie Solkane^{®} 365 mfc der Firma Solvay Fluorides LLC. In einer bevorzugten Ausführungsform wird als Treibmittel d) Wasser als alleiniges Treibmittel eingesetzt.

Der Gehalt an Wasser beträgt in einer bevorzugten Ausführungsform von 1 bis 10 Gew.-%, bevorzugt 2 bis 9 Gew.-%, besonders bevorzugt 3 bis 7 Gew.-%, bezogen auf das Gesamtgewicht der Komponenten (b) bis (f).

Zu den Katalysatoren e) gehören Verbindungen, die die Reaktion der reaktive Wasserstoffatome, insbesondere Hydroxylgruppen, enthaltenden Polyhydroxyverbindungen b) sowie des chemischen Treibmittels mit den organischen Polyisocyanaten a) beschleunigen. In Betracht kommen organische Metallverbindungen, vorzugsweise organische Zinnverbindungen, wie Zinn(II)-salze von organischen Carbonsäuren, beispielsweise Zinn(II)-acetat, Zinn(II)-octoat, Zinn(II)-ethyl-hexanoat, Zinn(II)-laurat und die Dialkylzinn(IV)-salze von organischen Carbonsäuren, beispielsweise Dibutylzinndiacetat, Dibutylzinndilaurat, Dibutylzinnmaleat, Dioctylzinndiacetat sowie tertiäre Amine wie Triethylamin, Tributylamin, Dimethylcyclohexylamin, Dimethylbenzylamin, N-Methylimidazol, N-Methyl-, N-Ethyl-, N-Cyclohexylmorpholin, N,N,N',N'-Tetramethylethylendiamin, N,N,N',N'-Tetramethylbutylendiamin, N,N,N',N'-Tetramethyl-hexylendiamin-1,6, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-[3,3,0]-octan, 1,4-Diaza-bicyclo-[2,2,2]-octan, und Alkanolaminverbindungen wie Triethanolamin, Tris-isopropanolamin, N-Methyl- und N-Ethyl-diethanolamin und Dimethylethanolamin. Als Katalysatoren kommen weiter in Betracht: Tris-(dialkylamino)-s-hexahydrotriazine, insbesondere Tris-(N,N-dimethylamino)-s-hexahydrotriazin, Tetraalkylammoniumsalze wie beispielsweise N,N,N-Trimethyl-N-(2-hydroxy-propyl)-formiat, N,N,N-Trimethyl-N-(2-hydroxy-propyl)-2-ethyl-hexanoat, Tetraalkyl-ammoniumhydroxide wie Tetramethylammoniumhydroxid, Alkalihydroxide wie Natriumhydroxid, Alkalialkoholate wie Natriummethylat und Kaliumisopropylat, sowie Alkali- oder Erdalkalisalze von Fettsäuren mit 1 bis 20 C-Atomen und gegebenenfalls seitenständigen OH-Gruppen.

Beispielsweise können gegenüber Isocyanaten reaktionsfähige tertiäre Amine wie beispielsweise N,N-Dimethylaminopropylamin, Bis-(Dimethylaminopropyl)-amin, N,N-Dimethylaminopropyl-N'-methyl-ethanolamin, Dimethylaminoethoxyethanol, Bis-(Dimethylaminopropyl)amino-2-propanol, N,N-Dimethylaminopropyl-dipropanolamin, N,N,N'-Trimethyl-N'-hydroxyethyl-bisaminoethylether, N,N-Dimethylaminopropylharnstoff, N-(2-Hydroxypropyl)-imidazol, N-(2-Hydroxyethyl)-imidazol, N-(2-Aminopropyl)-imidazol und/oder die in EP-A 0 629 607 beschriebenen Umsetzungsprodukte aus Acetessigsäureethylester, Polyetherpolyolen und 1-(Dimethylamino)-3-amino-propan als Katalysator e) verwendet werden.

Als Hilfsmittel und Zusatzstoffe f) können Schaumstabilisatoren, Zellöffner, oberflächenaktive Substanzen, Reaktionsverzögerer, Stabilisatoren gegen Alterungs- und Witterungseinflüsse, Weichmacher, Flammhemmer, fungistatisch und bakteriostatisch wirksame Substanzen, Pigmente und Farbstoffe sowie die an sich bekannten üblichen organischen und anorganischen Füllstoffe eingesetzt werden.

Als Schaumstabilisatoren werden vorzugsweise siliconbasierte Schaumstabilisatoren verwendet. Weiter können Siloxan-Polyoxyalkylen-Copolymere, Organopolysiloxane, ethoxylierte Fettalkohole und Alkylphenole und Ricinusöl- bzw. Ricinolsäureester als Schaumstabilisatoren verwendet werden.

Als Zellöffner wirken beispielweise Paraffine, Polybutadiene, Fettalkohole und Dimethylpolysiloxane.

Als Stabilisatoren gegen Alterungs- und Witterungseinflüsse werden meist Antioxidantien eingesetzt. Dies können beispielsweise sterisch gehinderte Phenole, HALS-Stabilisatoren (hindered amine light stabilizer), Triazine, Benzophenone und Benzotriazole sein.

Als oberflächenaktive Substanzen kommen beispielsweise Verbindungen in Betracht, welche zur Unterstützung der Homogenisierung der Ausgangsstoffe dienen und eine Phasenstabilität der Polyolkomponente über längere Zeiträume gewährleisten. Diese sind gegebenenfalls auch geeignet, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z. B. ölsaures Diethylamin, stearinsaures Diethanolamin, ricinolsaures Diethanolamin, Salze von Sulfonsäuren, z. B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl und Zellregler, wie Paraffine, Fettalkohole und Dimethylpolysiloxane. Zur Verbesserung der Emulgierwirkung, der Zellstruktur und/oder Stabilisierung des Schaums eignen sich ferner oligomere Polyacrylate mit Polyoxyalkylen- und Fluoralkanresten als Seitengruppen.

Die oberflächenaktiven Substanzen werden üblicherweise in Mengen von 0,01 bis 5 Gew.-%, bezogen auf das Gesamtgewicht der Polyhydroxylverbindungen b), eingesetzt.

Geeignete Flammschutzmittel sind beispielsweise Trikresylphosphat, Tris-(2-chlorethyl)phosphat, Tris-(2-chlorpropyl)phosphat, Tris(1,3-dichlorpropyl)phosphat, Tris-(2,3-dibrompropyl)phosphat und Tetrakis-(2-chlorethyl)-ethylendiphosphat.

Außer den bereits genannten halogensubstituierten Phosphaten können auch anorganische Flammschutzmittel, wie roter Phosphor, Aluminiumoxidhydrat, Antimontrioxid, Arsenoxid, Ammoniumpolyphosphat, Blähgraphit und Calciumsulfat oder Cyanursäurederivate, wie z. B. Melamin oder Mischungen aus mindestens zwei Flammschutzmitteln, wie z. B. Ammoniumpolyphosphaten und Melamin und/oder Blähgraphit sowie gegebenenfalls Stärke zum Flammfestmachen der erfindungsgemäß hergestellten PU-Hartschaumstoffe verwendet werden.

Als Füllstoffe, insbesondere verstärkend wirkende Füllstoffe, können die an sich bekannten, üblichen organischen und anorganischen Füllstoffe, Verstärkungsmittel und Beschwerungsmittel zugegeben werden. Im einzelnen seien beispielhaft genannt: anorganische Füllstoffe wie z. B. silikatische Mineralien, beispielsweise Schichtsilikate wie Antigorit, Serpentin, Hornblenden, Amphibole, Chrysotil, Zeolithe, Talkum; Metalloxide, wie z. B. Kaolin, Aluminiumoxide, Aluminiumsilikat, Titanoxide und Eisenoxide, Metallsalze wie z. B. Kreide, Schwerspat und anorganische Pigmente, wie Cadmiumsulfid, Zinksulfid sowie Glaspartikel. Als organische Füllstoffe kommen beispielsweise in Betracht: Russ, Melamin, Kollophonium, Cyclopentadienylharze und polymermodifierte Polyoxyalken-polyole.

Nähere Angaben über Verwendungs- und Wirkungsweise der oben genannten Hilfsmittel und Zusatzmittel sowie weitere Beispiele sind z. B. im "Kunststoffhandbuch, Band 7, Polyurethane", Carl Hanser Verlag, 3. Auflage 1993, Kapitel 3.4 angegeben.

Organische Polyisocyanate a), Polyhydroxyverbindungen b), Kettenverlängerungs- und/oder Vernetzungsmittel c), Treibmittel d), Katalysatoren e) und gegebenenfalls Hilfsmittel und Zusatzstoffe f) werden in solchen Mengen zur Umsetzung gebracht, dass der Isocyanatindex im Bereich von 80 bis 150, bevorzugt 95 bis 130, besonders bevorzugt 98 bis 118 liegt.

Dabei wird unter Isocyanatindex im Rahmen der vorliegenden Erfindung das stöchiometrische Verhältnis von Isocyanatgruppen zu mit Isocyanat reaktiven Gruppen, multipliziert mit 100, verstanden. Unter mit Isocyanat reaktiven Gruppen werden dabei alle in der Reaktionsmischung enthaltenen, mit Isocyanat reaktiven Gruppen, einschließlich chemischer Treibmittel, verstanden, nicht aber die Isocyanatgruppe selbst.

Die Polyurethan-Hartschaumstoffe werden vorzugsweise nach dem one-shot-Verfahren in Form von großen Schaumstoffblöcken kontinuierlich in Blockschaumanlagen oder diskontinuierlich in offenen Schaumstoff-Formwerkzeugen hergestellt. Bei Verwendung einer Mischkammer mit mehreren Zulaufdüsen können die Ausgangskomponenten einzeln zugeführt und in der Mischkammer intensiv vermischt werden. Als besonders vorteilhaft hat es sich erwiesen, nach dem 2-Komponenten-Verfahren zu arbeiten und als sogenannte Komponente A ein Gemisch aus der Mischung der Polyhydroxyverbindungen b), Kettenverlängerungs- und/oder Vernetzungsmittel c), Treibmittel d), Katalysatoren e) und gegebenenfalls Hilfsmittel und Zusatzstoffe f) zu verwenden und als sogenannte Komponente B die organischen, gegebenenfalls modifizierten Polyisocyanate a) einzusetzen. Da die A- und B-Komponenten sehr gut lagerstabil sind, können sie in dieser Form einfach transportiert und brauchen vor der Verarbeitung nur noch in den entsprechenden Mengen intensiv gemischt werden. Die Vermischung der Aufbaukomponenten a) bis f) oder der Komponenten (A) und (B) kann mit Hochdruck- oder Niederdruck-Verarbeitungsanlagen durchgeführt werden.

Zur Herstellung der PU-Hartschaumstoffe werden die beschriebenen Ausgangsstoffe, zweckmäßigerweise in Form der Komponenten A und B, bei Temperaturen von ungefähr 15 bis 60 °C, vorzugsweise 20 bis 40 °C gemischt und danach die Reaktionsmischung in offenen, gegebenenfalls temperierten Formwerkzeugen oder in kontinuierlich arbeitenden Blockschaumanlagen aufschäumen gelassen.

Die erhaltenen plastisch verformbaren PU-Hartschaumstoffe besitzen in Abhängigkeit von der verwendeten Treibmittelmenge vorteilhafterweise Dichten von 10 bis 45 g/cm³, vorzugsweise von 15 bis 35 g/cm³. Die Produkte zeigen gleichzeitig eine hohe Härte und Biegefestigkeit und eine sehr gute Hydrolysebeständigkeit.

Aus den erhaltenen PU-Hartschaumstoffblöcken, können falls erforderlich, entsprechend den herzustellenden Formkörper dimensionierte Schaumstoffblöcke geschnitten und diese in PU-Hartschaumstoffplatten mit einer Dicke von 4 bis 50 mm, vorzugsweise 6 bis 30 mm und insbesondere von 6 bis 20 mm gespalten werden. Hierzu geeignet sind alle technisch üblichen Spaltvorrichtungen, wobei in der Praxis vorzugsweise Horizontalspaltanlagen mit umlaufenden Bandmesser verwendet werden.

Die erhaltenen plastisch verformbaren PUR-Hartschaumstoffplatten können ein- oder mehrseitig mit Klebstoffen, z. B. feuchtigkeitshärtenden Klebstoffen auf Isocyanatbasis oder thermoplastischen Schmelzklebstoffen, beschichtet und danach mit Verstärkungs-, Abdeck- und/oder Dekormaterialien kaschiert werden.

Zur Bildung der Sandwichelemente können übliche Verfahren eingesetzt werden, beispielsweise das Formen und Aushärten in einem beheizten Werkzeug.

Erfindungsgemäße plastisch verformbare Polyurethan-Hartschaumstoffe haben ausgezeichnete Schalldämmeigenschaften und eignen sich daher hervorragend zur Verwendung als Innenverkleidung eines Kraftfahrzeugs, insbesondere als Dachhimmel.

Anhand der folgenden Beispiele sollen die Vorteile der Erfindung verdeutlicht werden.

### Ausgangsmaterialien:

| | |
|---|---|
| Polyol A: | Polyetherol mit OH-Zahl 535 mgKOH/g, EO Gehalt von 70 %, einem Gehalt an primären OH-Gruppen > 95 % und einer Funktionalität von 3 |
| Polyol B: | Polyetherol mit OH-Zahl 28 mgKOH/g, PO Gehalt von 84 %, einem Gehalt an primären OH-Gruppen von 79 % und einer Funktionalität von 2,7 |
| Polyol C: | Polyetherol mit OH-Zahl 555 mgKOH/g und einem Gehalt an primären OH-Gruppen von 56 % |
| Polyol D: | Polyetherol mit OH-Zahl 30 mgKOH/g, PO Gehalt von 81 %, einem Gehalt an primären OH-Gruppen von 68 % und einer Funktionalität von 2,2 |
| Polyol E: | Polyetherol mit OH-Zahl 570 mgKOH/ und einem Gehalt an primären OH-Gruppen von < 10 % |
| Polyol F: | Polyetherol mit OH-Zahl 160 mgKOH/g und einem Gehalt an primären OH-Gruppen von < 10 % |
| Jeffcat^{®} DPA: | gegenüber Isocyanat reaktiver Amin-Katalysator der Firma Huntsman |
| Irganox^{®} HP 3560: | Antioxidant der Firma Ciba Geigy |
| Tegostab^{®} B 8409: | Zellstabilisator der Firma Goldschmidt |
| Tegostab^{®} B 8476: | Zellstabilisator der Firma Goldschmidt |
| Lupranat^{®} M 20W: | Polymer-MDI mit NCO Gehalt 31,2 |
| Lupranat^{®} MI: | Gemisch aus 2,4'- und 4,4'-MDI mit NCO Gehalt von 33,2 |
| Lupranat^{®} ME: | 4,4'-MDI |

### Beispiel (erfindungsgemäß):

Es wurde folgende Rezeptur in einer 125 l Box hergestellt:

| Polyol-Komponente: | |
|---|---|
| 44,8 Tl. | Polyol A |
| 31,6 Tl. | Polyol B |
| 10 Tl. | Polyol C |
| 4 Tl. | Wasser |
| 6 Tl. | Tripropylenglykol |
| 2 Tl. | Dipropylenglykol |
| 0,4 Tl. | Schwarzpaste |
| 0,6 Tl. | Jeffcat DPA |
| 0,6 Tl. | Tegostab B 8476 |
| | |

| Iso-Komponente: | |
|---|---|
| 60 Tl. | Lupranat^{®} M 20W |
| 40 Tl. | Lupranat^{®} MI |
| | |
| Mischungsverhältnis (Poly: Iso): 100:157 | |
| | |
| Dichte des Schaums: 32,6 kg/m³ | |

Die Luftdurchlässigkeit des Schaumblocks wird mittels einer Staudruckmessung ermittelt. Hierzu wird ein definierter Luftstrom auf den Schaumblock über einen auf dem Schaumblock anliegenden Trichter geblasen und der dabei sich aufbauende Staudruck gemessen. Der oben beschriebene Schaum zeigt dabei bei einer Luftfließrate von 6 m³/h einen Staudruck von 38 mbar.

### Vergleichsbeispiel:

Es wurde folgende Rezeptur in einer 125 l Box hergestellt:

| Polyol-Komponente: | |
|---|---|
| 40,6 Tl. | Polyol E |
| 9,5 Tl. | Polyol F |
| 19 Tl. | Polyol D |
| 9,5 Tl. | Polyol B |
| 5,2 Tl. | Polypropylenglykol 450 |
| 7,6 Tl. | 1,4-Butandiol |
| 2,25 Tl. | Glycerin |
| 0,65 Tl. | Tegostab^{®} B 8409 |
| 0,1 Tl. | Tegostab^{®} B 8476 |
| 0,95 Tl. | Irganox^{®} HP 3560 |
| 0,4 Tl. | 1,4-Diaza-bicyclo-[2,2,2]-octan (33,3 %ig in Dipropylenglykol) |
| 4,15 Tl. | Wasser |
| | |

| Iso-Komponente: | |
|---|---|
| 60 Tl. | Lupranat^{®} M 20W |
| 35 Tl. | Lupranat^{®} MI |
| 5 Tl. | Lupranat^{®} ME |
| | |
| Mischungsverhältnis (Poly: Iso): 100:164 | |
| | |
| Dichte des Schaums: 31,7 kg/m³ | |

Die Luftdurchlässigkeit des Schaumblocks mittels Staudruckmessung ergab, dass bereits bei einer Luftfließrate von 0,6 m³/h ein Staudruck von 40 mbar anlag. Somit ist dieser Schaum deutlich weniger luftdurchlässig als der Block im erfindungsgemäßen Beispiel.

## Patentansprüche

1. Verfahren zur Herstellung von plastisch verformbaren Polyurethan-Hartschaumstoffen, bei dem man
a) organische Polyisocyanate mit
b) Polyhydroxyverbindungen, enthaltend
b1) 2 bis 4-funktionelles Polyoxyalkylenpolyol mit einer Hydroxylzahl von 150 bis 650 und einem Anteil an primären Hydroxylgruppen von größer 70 % und
b2) di- bis trifunktionelles Polyoxyalkylenpolyol mit einer Hydroxylzahl von 25 bis 40 und einem Anteil an primären Hydroxylgruppen von größer 70 %
c) gegebenenfalls Kettenverlängerungs- und/oder Vernetzungsmittel,
d) Treibmittel,
e) Katalysatoren und gegebenenfalls
f) Hilfsmittel und Zusatzstoffe
zu einer Reaktionsmischung vermischt und diese Reaktionsmischung ausreagieren lässt, wobei der Gewichtsanteil der Verbindungen (b1) und (b2) an der Komponente (b) mindestens 70 Gew.-%, der Isocyanatindex 80 bis 150 beträgt und das Verhältnis von b1) zu b2) 0,8 : 1 bis 1,5 : 1 ist.

2. Verfahren nach Anspruch 1, **dadurch gekennzeichnet, dass** die Polyhydroxyverbindungen b1) einen Ethylenoxidgehalt von mindestens 30 Gew.-% aufweist.

3. Verfahren nach Anspruch 1 oder 2, **dadurch gekennzeichnet, dass** die Polyhydroxyverbindungen b2) einen Propylenoxidgehalt von mindestens 50 Gew.-% aufweist.

4. Verfahren nach einem der Ansprüche 1 bis 3, **dadurch gekennzeichnet, dass** man als organische Isocyanate eine Mischung aus Diphenylmethandiisocyanaten und Polyphenyl-polymethylen-polyisocyanaten verwendet.

5. Verfahren nach einem der Ansprüche 1 bis 4, **dadurch gekennzeichnet, dass** man als Kettenverlängerungs- und/oder Vernetzungsmittel Dipropylenglykol und/ oder Tripropylenglykol einsetzt.

6. Verfahren nach einem der Ansprüche 1 bis 5, **dadurch gekennzeichnet, dass** man als Treibmittel Wasser einsetzt.

7. Plastisch verformbarer Polyurethan-Hartschaumstoff, erhältlich nach einem Verfahren gemäß einem der Ansprüche 1 bis 5.

8. Verwendung eines plastisch verformbaren Polyurethan-Hartschaumstoffs gemäß Anspruch 7 zur Innenverkleidung eines Kraftfahrzeugs, insbesondere als Dachhimmel.

## Claims

1. A process for producing plastically deformable rigid polyurethane foams, wherein
a) organic polyisocyanates are mixed with
b) polyhydroxy compounds comprising
b1) from 2- to 4-functional polyoxyalkylene polyol having a hydroxyl number of from 150 to 650 and a proportion of primary hydroxyl groups of greater than 70% and
b2) bifunctional to trifunctional polyoxyalkylene polyol having a hydroxyl number of from 25 to 40 and a proportion of primary hydroxyl groups of greater than 70%,
c) optionally, chain extenders and/or crosslinkers,
d) blowing agents,
e) catalysts and, optionally,
f) auxiliaries and additives
to form a reaction mixture and this reaction mixture is allowed to react to completion, where the proportion by weight of compounds (b1) and (b2) in component (b) is at least 70% by weight, the isocyanate index is from 80 to 150 and the ratio of b1) to b2) is from 0.8:1 to 1.5:1.

2. The process according to claim 1, wherein the polyhydroxy compounds b1) have an ethylene oxide content of at least 30% by weight.

3. The process according to claim 1 or 2, wherein the polyhydroxy compounds b2) have a propylene oxide content of at least 50% by weight.

4. The process according to any of claims 1 to 3, wherein a mixture of diphenylmethane diisocyanates and polyphenylpolymethylene polyisocyanates is used as organic isocyanates.

5. The process according to any of claims 1 to 4, wherein dipropylene glycol and/or tripropylene glycol are/is used as chain extender and/or crosslinker.

6. The process according to any of claims 1 to 5, wherein water is used as blowing agent.

7. A plastically deformable rigid polyurethane foam which can be obtained by a process according to any of claims 1 to 5.

8. The use of a plastically deformable rigid polyurethane foam according to claim 7 for interior lining of a motor vehicle, in particular as roof interior.

## Revendications

1. Procédé de fabrication de mousses rigides de polyuréthane plastiquement déformables, selon lequel
a) des polyisocyanates organiques sont mélangés avec
b) des composés polyhydroxy, contenant
b1) un polyoxyalkylène-polyol 2- à 4-fonctionnel ayant un indice hydroxyle de 150 à 650 et une proportion de groupes hydroxyle primaires de plus de 70 %, et
b2) un polyoxyalkylène-polyol bi- à trifonctionnel ayant un indice hydroxyle de 25 à 40 et une proportion de groupes hydroxyle primaires de plus de 70 %,
c) éventuellement des agents d'allongement de chaînes et/ou de réticulation,
d) des agents gonflants,
e) des catalyseurs, et éventuellement
f) des adjuvants et additifs,
pour former un mélange réactionnel, et ce mélange réactionnel est laissé réagir, la proportion en poids des composés (b1) et (b2) du composant (b) étant d'au moins 70 % en poids, l'indice d'isocyanate étant de 80 à 150 et le rapport entre b1) et b2) étant de 0,8:1 à 1,5:1.

2. Procédé selon la revendication 1, **caractérisé en ce que** les composés polyhydroxy b1) présentent une teneur en oxyde d'éthylène d'au moins 30 % en poids.

3. Procédé selon la revendication 1 ou 2, **caractérisé en ce que** les composés polyhydroxy b2) présentent une teneur en oxyde de propylène d'au moins 50 % en poids.

4. Procédé selon l'une quelconque des revendications 1 à 3, **caractérisé en ce qu'**un mélange de diisocyanates de diphénylméthane et de polyisocyanates de polyphényl-polyméthylène est utilisé en tant qu'isocyanates organiques.

5. Procédé selon l'une quelconque des revendications 1 à 4, **caractérisé en ce que** du dipropylène glycol et/ou du tripropylène glycol sont utilisés en tant qu'agent d'allongement de chaînes et/ou de réticulation.

6. Procédé selon l'une quelconque des revendications 1 à 5, **caractérisé en ce que** de l'eau est utilisée en tant qu'agent gonflant.

7. Mousse rigide en polyuréthane plastiquement déformable, pouvant être obtenue par un procédé selon l'une quelconque des revendications 1 à 5.

8. Utilisation d'une mousse rigide en polyuréthane plastiquement déformable selon la revendication 7 pour l'habillage intérieur d'un véhicule automobile, notamment en tant que garniture de toit.
